# EUROPEAN PATENT SPECIFICATION

(11) **EP 1 692 991 B1**
(45) Date of publication and mention of the grant of the patent: **11.06.2014**
(21) Application number: 05109320.1
(22) Date of filing: 07.10.2005
(51) Int. Cl.: A47L 9/16, A47L 9/12

(54) **Dust collector for vacuum cleaner**
Staubsammler für Staubsauger
Collecteur de poussières pour aspirateur

(30) Priority: 17.02.2005 KR 2005013193
(43) Date of publication of application: 23.08.2006
(73) Proprietor: LG Electronics, Inc., Seoul 150-721 (KR)
(72) Inventor: Yoo, Myung Sig, Gyeongsangnam-do (KR); Yang, Hae Seock, Gyeongsangnam-do (KR); Lee, Sang In, Gyeongsangnam-do (KR); Koh, Moo Hyon, Gyeongsangnam-do (KR); Park, Jae Young, Gyeongsangnam-do (KR)
(74) Representative: Henkel, Breuer & Partner

(56) References cited:
- EP-A- 1 493 373
- US-A1- 2003 221 277
- US-A1- 2004 107 530
- US-A1- 2005 015 921
- US-A1- 2005 050 864
- US-B1- 6 782 585

## Description

### BACKGROUND OF THE INVENTION

### Field of the Invention

The present invention relates to a vacuum cleaner, and more particularly, to a dust collector for a vacuum cleaner which collects contaminants, utilizing the cyclone principle.

### Discussion of the Related Art

A cyclone dust collector is an appliance which collects contaminants such as dust entrained in air, utilizing the cyclone principle. Such a cyclone dust collector may be applied to diverse fields, and is mainly applied to vacuum cleaners, for domestic purposes.

Recently, a multi-cyclone dust collector has been proposed, which includes a plurality of cyclones to achieve an enhancement in dust collecting performance.

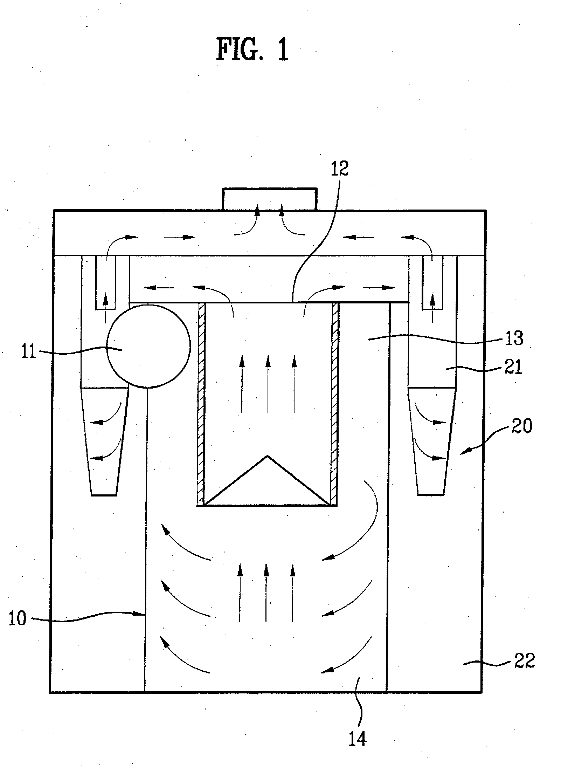

Hereinafter, a conventional dust collector applied to a vacuum cleaner will be described with reference to FIG. 1.

The conventional dust collector includes a primary cyclone dust collecting part 10, which sucks dirt-laden air from the outside of the dust collector, and collects dust of a relatively large grain size from the sucked air. The dust collector also includes a secondary cyclone dust collecting part 20, which is connected to the primary cyclone dust collecting part 10, and collects dust of a relatively small grain size from the sucked air.

The primary cyclone dust collecting part 10 includes a cylindrical container having a lower end disposed to be in close contact with the bottom of the dust collector. The primary cyclone dust collecting part 10 also includes a first air inlet 11 formed through an upper portion of a peripheral wall of the cylindrical container at one side of the cylindrical container to receive dirt-laden air in a tangential direction, and a first air outlet 12 centrally formed through an upper end of the cylindrical container to discharge the air, which has been primarily cleaned.

Thus, the upper space of the primary cyclone dust collecting part 10 forms a primary cyclone 13 for performing separation of contaminants from dirt-laden air, using centrifugal force, whereas the lower space of the primary cyclone dust collecting part 10 forms a primary dust storage 14 for storing the centrifugally-separated contaminants.

The secondary cyclone dust collecting part 20 includes a plurality of small secondary cyclones 21 circumferentially arranged around the upper portion of the primary cyclone dust collecting part 10, and a secondary dust storage 22 for storing dust separated in the secondary cyclones 21.

The secondary dust storage 22 is arranged beneath the secondary cyclones 21. The primary and secondary dust storages 14 and 22 are partitioned by the peripheral wall of the primary cyclone dust collecting part 10.

Accordingly, air discharged from the first air outlet 12 is introduced into the secondary cyclone 21, and is upwardly discharged from the dust collector after being subjected to the secondary dust separation process.

In addition, a separate top cover (not shown) is mounted to the top of the above-mentioned conventional dust collector. A dust collector handle is provided at the top cover to allow the user to easily perform assembly and disassembly of the dust collector.

In the conventional dust collector having the above-mentioned configuration, however, there is a problem in that separation of contaminants having a fine grain size cannot be achieved because the separation of contaminants is carried out only in a cyclone manner.

US 6782585 B1 discloses an upright-type vacuum cleaner comprising several cleaning stages wherein each cleaning stage is a cyclone. A suction motor is arranged in a top portion of the upright vacuum cleaner so that each cyclone cleaning stage is arranged below and upstream of the suction motor. In one embodiment the upright vacuum cleaner has an additional screen filter which is positioned upstream of the suction motor and downstream of the cyclone cleaning stages. The screen filter is provided to filter the air in a further stage and the air passing this screen filter is used to cool the suction motor.

US 2004/0107530 A1 discloses a vacuum cleaner which has a cyclone type dust collecting apparatus arranged as a precleaning stage which is placed at an extension pipe of a vacuum cleaner suction port. The cyclone dust collecting apparatus is used to reduce the amount of dust to be filtered in a paper filter that is housed in a body of the vacuum cleaner to which the extension pipe is connected via a flexible hose. The cyclone type dust collecting apparatus has a cyclone dust collection stage and a downstream second filtering stage in the form of a porous material for filtering the minute dust in the air discharged from the cyclone dust collection stage.

### SUMMARY OF THE INVENTION

Accordingly, the present invention is directed to a dust collector of a vacuum cleaner that substantially obviates one or more problems due to limitations and disadvantages of the related art.

An object of the present invention is to provide a dust collector of a vacuum cleaner which has an improved structure capable of achieving separation of contaminants having a fine grain size.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a dust collector of a vacuum cleaner comprises features according to claim 1.

The filter housing may include a filter housing discharge member for discharging the air passing through the filter, and housing bosses for fastening the filter housing to the top cover.

The filter housing discharge member may be inclined with respect to the top portion of the dust collecting container. Specifically, the filter housing discharge member may be downwardly inclined toward a cover discharge port formed at the top cover.

The filter may be in contact with the top portion of the dust collecting container at one side of the filter, and may be spaced apart from the top portion of the dust collecting container by a predetermined gap at the other side of the filter.

The filter housing discharge member may include lattice-shaped discharge ports.

The filter housing further may include a filter support member for supporting the filter.

The filter may be supported by the filter support member, or may be forcibly fitted in the filter housing.

The filter support member may comprise support protrusions protruded from an inner peripheral surface of the filter housing.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a longitudinal sectional view schematically illustrating a conventional dust collector;

FIG. 2 is a perspective view illustrating a dust collector according to an embodiment of the present invention, which is separated from a cleaner body;

FIG. 3 is a perspective view illustrating an exploded state of the dust collector according to the embodiment of the present invention;

FIG. 4 is a longitudinal sectional view schematically illustrating the dust collector according to the embodiment of the present invention;

FIG. 5 illustrates a filter housing according to an embodiment of the present invention, using a plan view and a longitudinal sectional view; and

FIG. 6 illustrates a filter housing according to another embodiment of the present invention, using a plan view and a longitudinal sectional view.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

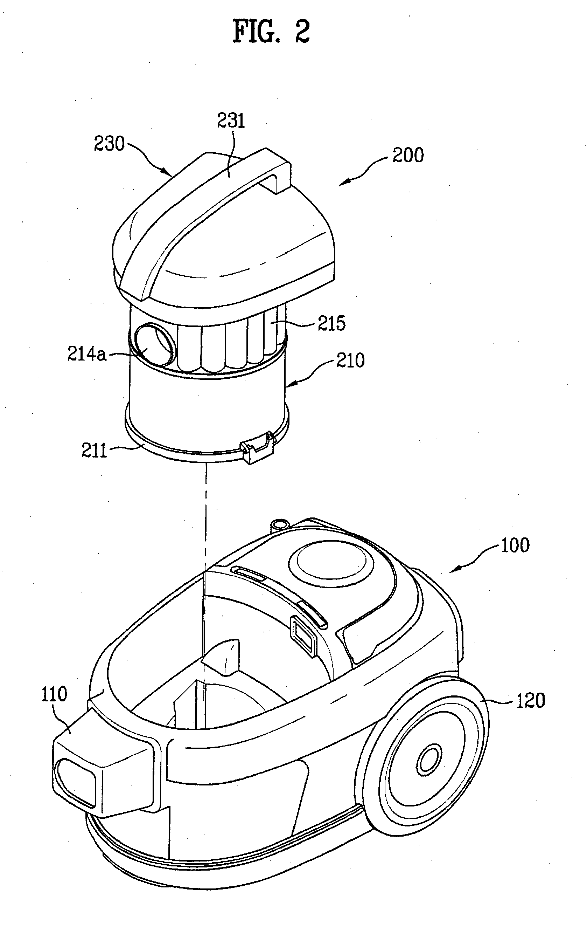

Hereinafter, a vacuum cleaner, in which a dust collector according to an embodiment of the present invention is incorporated, will be described with reference to FIG. 2.

The vacuum cleaner includes a suction nozzle (not shown) which sucks air containing contaminants while moving along a floor to be cleaned, a cleaner body 100 which is separate from the suction nozzle, and a connecting hose (not shown) which connects the suction nozzle and cleaner body 100, and guides dirt-laden air sucked through the suction nozzle to the cleaner body 100.

A suction inlet having a certain size is formed at the bottom of the suction nozzle to suck air containing contaminants including dust. The suction of air through the nozzle suction inlet is achieved by a suction force generated from an air sucking device disposed in the cleaner body 100.

In the cleaner body 100, electronic elements (not shown) adapted to control the vacuum cleaner, and a fan-motor assembly (not shown) constituting the air sucking device are disposed.

In detail, a hose connector 110, to which the connecting hose is connected, is provided at a front upper portion of the cleaner body 100. Wheels 120 are rotatably mounted to opposite sides of a rear portion of the cleaner body 100, respectively, to enable the cleaner body 100 to smoothly move on a floor. A freely rotatable caster (not shown) is mounted to a front portion of the bottom of the cleaner body 100 to enable the cleaner body 100 to freely change the movement direction thereof.

Meanwhile, a dust collector 200 is separably mounted to the cleaner body 100. The dust collector 200 functions to separate contaminants from air sucked into the interior of the dust collector 200 via the suction nozzle and connecting hose, and to collect the separated contaminants.

The air, which emerges from the dust collector 200, is outwardly discharged from the rear portion of the cleaner body 100 after passing through a certain flow path defined in the cleaner body 100 and the fan-motor assembly (not shown).

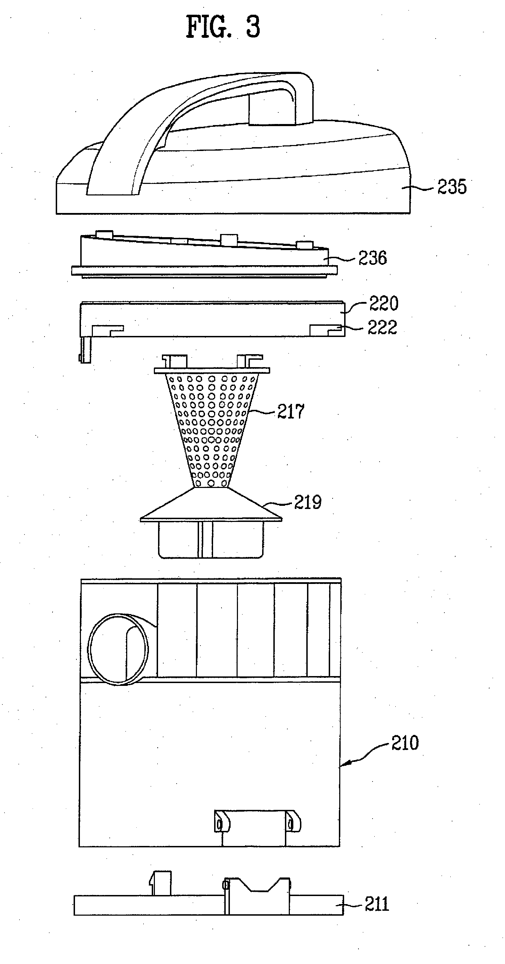

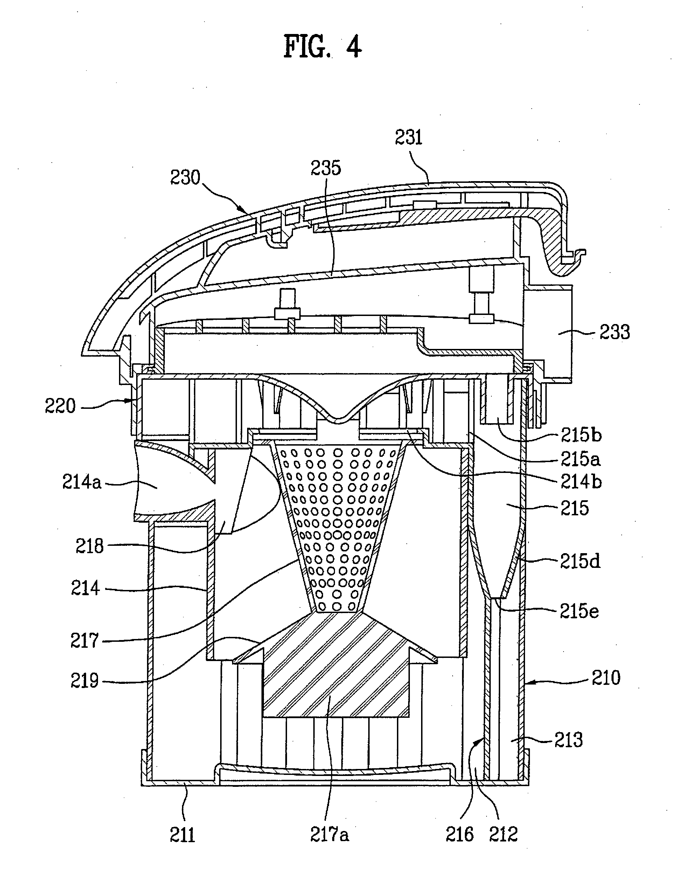

The dust collector 200 of the vacuum cleaner according to the present invention will now be described in detail with reference to FIGs. 3 and 4.

The dust collector 200 includes a dust collecting container 210 including a dust separating part for separating contaminants from air introduced into the dust collecting container 210, a dust storing part for collecting the contaminants separated by the dust separating part, and an air discharging part communicating with the dust separating part. The dust collector 200 also includes a top cover 230 separably coupled to the dust collecting container 210.

In detail, the dust collecting container 210 includes primary and secondary dust collecting parts for collecting contaminants such as dust. The dust collecting container 210 also includes a bottom panel 211 which constitutes the bottom of the dust collecting container 210.

The primary dust collecting part includes a primary dust separating section, and a primary dust storing section 212 for storing dust separated by the primary dust separating section. The primary dust collecting part is constituted by a substantially cylindrical container arranged in the dust collecting container 210.

The secondary dust collecting part is arranged around the primary dust collecting part. The secondary dust collecting part includes a secondary dust separating section for separating contaminants entrained in air discharged from the primary dust collecting part, and a secondary dust storing section 213 for storing the dust separated by the second dust separating section.

In the illustrated embodiment of the present invention, each of the primary and secondary dust separating sections includes a primary cyclone 214 and a plurality of small secondary cyclones 215, which perform separation of contaminants in a cyclone manner.

Specifically, the primary cyclone 214 has a downwardly-opened cylindrical container shape. A first suction port 214a is formed through an upper portion of the primary cyclone 214 at one side of the primary cyclone 214. The first suction inlet 214a communicates with the hose connector 110 (FIG. 2). A first discharge port 214b is formed through the top of the primary cyclone 214 such that the first discharge port 214b extends vertically.

The first suction port 214a guides dirt-laden air introduced into the outside of the dust collector to flow in a tangential direction of the primary cyclone 214 so that the air entering the first suction port 214a flows spirally along an inner wall surface of the primary cyclone 214.

The small secondary cyclones 215 are arranged at the upper portion of the primary cyclone 214, and have peripheral walls formed integrally with a peripheral wall of the dust collecting container 210, respectively. In particular, the secondary cyclones 215 are circumferentially arranged around the upper portion of the primary cyclone 214. Each secondary cyclone 215 has an upper end upwardly protruded to a level higher than that of the upper end of the primary cyclone 214.

The peripheral wall of each secondary cyclone 215 is vertically cut out at a region where the peripheral wall is upwardly protruded above the upper end of the primary cyclone 214, thereby forming a second suction port 215a communicating with the first discharge port 214b. The second suction port 215a of each secondary cyclone 215 guides air emerging from the first discharge port 214b to flow in a tangential direction of the secondary cyclone 215 so that the air entering the second suction port 215a flows spirally along an inner wall surface of the secondary cyclone 215.

Each secondary cyclone 215 also has a conical portion 215d formed at a lower portion of the secondary cyclone 215 such that the conical portion 215d has a diameter gradually reduced as the conical portion 215d extends toward the bottom of the dust collecting container 210. A contaminants discharge port 215e is formed at a lower end of each secondary cyclone 215 to downwardly discharge contaminants such as dust.

The secondary cyclones 215 have an integrated structure such that adjacent ones of the secondary cyclones 215 are in contact with each other to prevent air from being leaked between the adjacent secondary cyclones 215. The dust collecting container 210 may further include a container cover 220 mounted to the upper end of the dust collecting container 210 to open or close the upper ends of the secondary cyclones 215. The container cover 220 more smoothly guides air emerging from the first discharge port 214b to the secondary cyclones 215. Second discharge ports 215b are formed at the container cover 220 along the peripheral portion of the container cover 220 to discharge air from the secondary cyclones 215, respectively.

Dust separated in the primary cyclone 214 and second cyclones 215, which have the above-described configurations, respectively, is stored in the dust storing part defined by the peripheral wall of the dust collecting container 210 and the bottom panel 211. The stored dust is subsequently outwardly discharged by virtue of gravity when the bottom panel 211 is opened.

The dust storing part is constituted by the primary dust storing section 212 and secondary dust storing section 213. The primary dust storing section 212 stores dust separated by the primary cyclone 214, and the secondary dust storing section 213 stores dust separated by the secondary cyclones 215.

The primary dust storing section 212 and secondary dust storing sections 213 are partitioned by a substantially cylindrical boundary wall 216, which is integrally connected to the lower ends of the secondary cyclones 215, and has a diameter smaller than that of the peripheral wall of the dust collecting container 210.

The boundary wall 216 has a lower end extending downward to the bottom of the dust collecting container 210, that is, the upper surface of the bottom panel 211, beyond the lower end of the primary cyclone 214. Accordingly, the boundary wall 216 prevents the primary and secondary dust storing sections 212 and 213 from communicating with each other.

It is preferred that the boundary wall 216 have a circumferentially corrugated shape, in order to prevent the dust stored in the primary dust storing section 212 from floating due to a spiral air flow formed in the primary cyclone 214.

In addition to the above-described configuration, the dust collector according to the illustrated embodiment of the present invention further includes a discharge member 217 arranged in the primary cyclone 214 such that the discharge member 217 extends vertically. A plurality of holes are formed at a peripheral wall of the discharge member 217, in order to allow the discharge member 217 to communicate with the first discharge port 214b of the primary cyclone 214. The dust collector also includes a guide rib 218 provided at the primary cyclone 214, and adapted to guide air entering the first suction port 214a.

It is preferred that the discharge member 217 be centrally arranged in the primary cyclone 214, extend axially through the primary cyclone 214, and have a substantially conical structure having an opened upper end and a closed lower end while having a diameter gradually reduced as the discharge member 217 extends downward. When the discharge member 217 has such a structure, it is possible to prevent dust moving downward along the inner peripheral wall surface of the primary cyclone 214 from being influenced by a suction force exerted in the discharge member 217, because the velocity of the spiral air flow in the primary cyclone 214 is gradually reduced toward the lower end of the primary cyclone 214.

The upper end of the discharge member 217 is separably coupled with the peripheral edge of the first discharge port 214b. An annular sealing member, which provides a sealing effect, is interposed between the upper end of the discharge member 217 and the first discharge port 214b.

A floatation prevention member 219 may also be mounted to the lower end of the discharge member 217, in order to prevent dust stored in the primary dust storing section 212 from floating. The floatation prevention member 219 prevents the dust collected in the primary dust storing section 212 from rising due to the spiral air flow, and thus, from entering the secondary cyclones 215.

For such a function, it is preferred that the floatation prevention member 219 have a radially-extending structure formed integrally with the lower end of the discharge member 217. It is also preferred that the floatation prevention member 219 has a downwardly-inclined upper surface. Specifically, the floatation prevention member 219 has a conical structure having a diameter gradually increased as the floatation prevention member 219 extends downward.

The guide rib 218 guides air entering the first suction port 214a to flow in a direction tangential to the inner peripheral wall surface of the primary cyclone 214. That is, the guide rib 218 prevents the air entering the first suction port 214a from being directly introduced into the discharge member 217.

Meanwhile, the top cover 230 includes a cover housing 235 provided with a dust collector handle 231 adapted to enable the user to carry the dust collector, and a filter housing 236 disposed in the cover housing 235. The top cover 230 is separably coupled to the container cover 220.

A filter is arranged in the filter housing to filter air discharged from the discharge ports 215b of the dust collecting container 210. Engagement grooves are formed at the inner peripheral surface of the filter housing 236. These engagement grooves are engagable with protrusions 222 formed at the outer peripheral surface of the container cover 220, respectively.

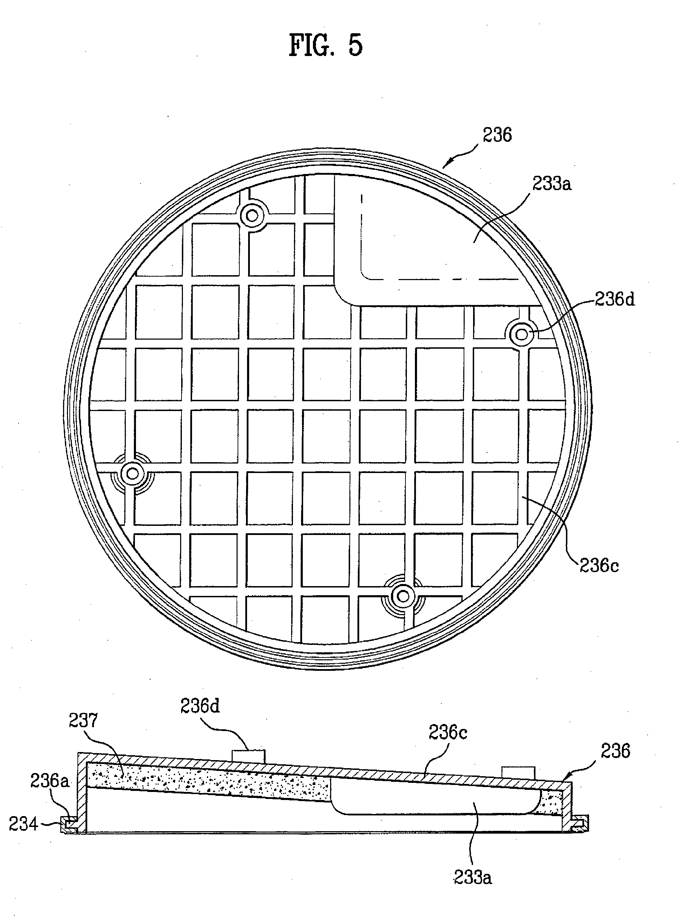

Hereinafter, an embodiment of the filter housing according to the present invention will be described in detail with reference to FIG. 5. A filter 237 is disposed in the filter housing 236 to filter air discharged from the discharge ports 215b of the dust collecting container 210. In accordance with this embodiment, a certain space is defined between the filter 237 and the dust collecting container 210 at a region where the discharge ports 215b are arranged, that is, between the filter 237 and the air discharging part of the dust collecting container 210. Specifically, it is preferred that the filter 237 be in contact with the top surface of the dust coliecting container 210 at one side of the filter 237, and be spaced apart from the top surface of the dust collecting container 210 by a certain gap at the other side of the filter 237. Of course, the filter 237 may be arranged in the filter housing 236 without contacting any portion of the top surface of the dust collecting container 210. The filter 237 may also be mounted in the filter housing 236 in a forced fitting manner.

The filter housing 236 includes a filter housing discharge member 236c for discharging air emerging from the filter 237. A cover discharge port housing 233a is formed on the filter housing discharge member 236c at one side of the filter housing discharge portion 236c. Housing bosses 236d are formed at desired positions on the discharge member 236a of the filter housing 236, in order to fasten the filter housing 236 to the cover housing 235.

It is preferred that the filter housing discharge member 236c be inclined at a certain angle. Specifically, it is preferred that the filter housing discharge member 236c be downwardly inclined toward the cover discharge port housing 233a. In accordance with such a structure, the filter 237 can obtain an increased filtering efficiency while occupying a minimal space in the filter housing 236. Of course, the filter housing discharge member 236c may have a structure having no inclination. Furthermore, the direction of the inclination may be optional.

The filter housing discharge member 236c not only supports the filter 237, but also functions as a discharge port for discharging air emerging from the filter 237, during operation of the dust collector. Preferably, the filter housing discharge member 236c comprises a latticed panel including discharge ports each having a predetermined shape. However, the filter housing discharge member 236c may have any other structures so long as it is possible to minimize the resistance of air discharged from the filter 237. For example, the filter housing discharge member 236c may comprise at least one panel having circular or polygonal discharge ports.

A flange 236a having a certain shape is formed at the lower end of the filter housing 236 along the outer peripheral surface of the filter housing 236. A sealing member 234 is fitted around the flange 236a to provide a sealing effect between the dust collecting container 210 and the top cover 230.

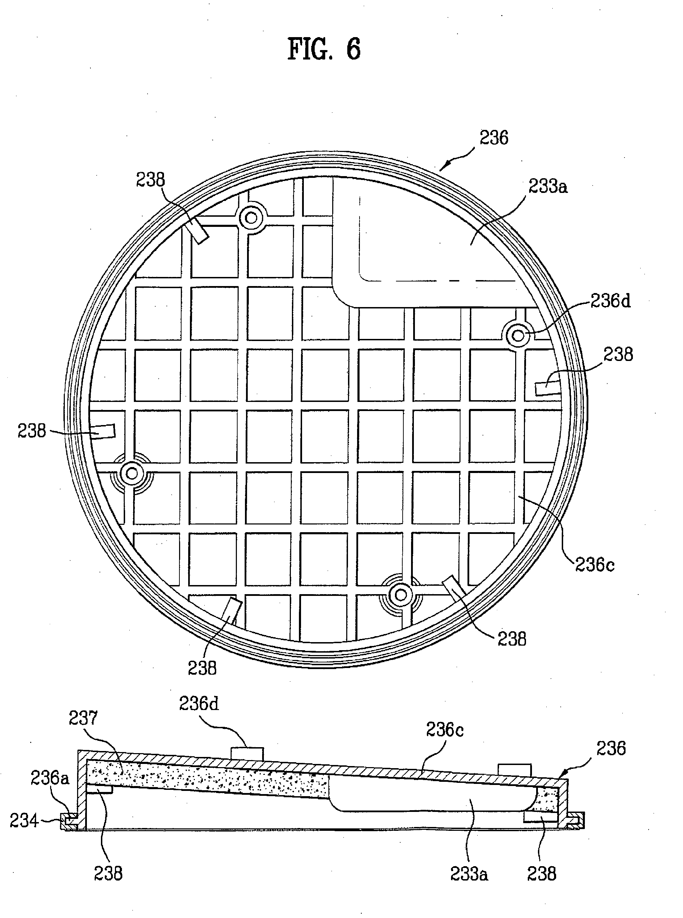

Hereinafter, another embodiment of the filter housing according to the present invention will be described in detail with reference to FIG. 6. In accordance with this embodiment, the filter housing 236 includes a filter housing discharge member 236c for discharging air emerging from the filter 237. Housing bosses 236d are formed at the filter housing discharge member 236c to fasten the filter housing 236 to the top cover 230. The filter housing 236 also includes a filter support member 238 for supporting the filter 237 disposed in the filter housing 236.

Since the filter housing discharge member 236c and housing bosses 236d in this embodiment are identical to those of the above-described embodiment, no description thereof will be given.

The filter support member 238 comprises at least two support protrusions extending radially from the inner peripheral surface of the filter housing 236. Preferably, the filter support member 238 comprises five support protrusions arranged along the inner peripheral surface of the filter housing 236 while being uniformly spaced apart from one another.

However, the filter support member 238 may comprise support grooves engagable with the peripheral edge of the filter 237 without being limited to the above-described embodiment. Furthermore, both the support protrusions and the support grooves may be formed at the inner peripheral surface of the filter housing 236.

Operation of the vacuum cleaner, in which the dust collector according to the illustrated embodiment of the present invention is incorporated, will now be described with reference to FIGs. 3 to 6.

When the vacuum cleaner operates, dirt-laden ambient air is first introduced into the primary cyclone 214 via the suction nozzle (not shown) and connecting hose (not shown). The air introduced into the primary cyclone 214 is guided by the guide rib 218 to flow in a direction tangential to the inner peripheral surface of the primary cyclone 214 without being directly introduced into the discharge member 217, thereby forming a spiral flow.

As a result, relatively heavy and large dust is separated from the air in accordance with the cyclone principle, and is then stored in the primary dust storing section 212 after falling downward. The dust stored in the primary dust storing section 212 is prevented from floating in accordance with the functions of the floatation prevention member 219 and corrugated boundary wall 216.

The air, from which relatively heavy and large dust has been separated, is discharged from the primary cyclone 214 through the first discharge port 214b communicating with the holes formed at the peripheral wall of the discharge member 217. The air is then introduced into the secondary cyclones 215 so that the air is again subjected to a dust separation process, in order to separate relatively light and fine dust from the air.

The air, from which relatively light and fine dust has been separated in the secondary cyclones 215, is introduced into the interior of the top cover 230 through the second discharge ports 215b. The air introduced into the interior of the top cover 230 is filtered by the filter 237, and is then rearwardly discharged through a cover discharge port 233 formed at the top cover 230. The air emerging from the cover discharge port 233 is outwardly discharged from the cleaner body 100 after moving along a predetermined flow path defined in a rear portion of the cleaner body 100.

The above-described dust collector for a vacuum cleaner according to the present invention has various effects.

That is, first, the dust collector according to the present invention has an advantage in that it is possible to uniformly collect fine dust over the entire portion of the filter because a predetermined space is formed between the filter and the dust collecting container at the region where the discharge ports of the dust collecting container are arranged.

Second, since the filter is disposed in the interior of the top cover in the dust collector according to the present invention, it is possible to perform refiltration for removal of fine dust. Thus, contaminant of a small grain size is separable, so that it is possible to use the dust collector for a prolonged period of time.

Third, it is possible to stably maintain the filter in position, and to conveniently achieve filter replacement because the filter support member is provided at the top cover of the dust collector. Accordingly, the dust collect can be conveniently used.

## Claims

1. A dust collector (200) for a vacuum cleaner comprising:
a dust collecting container (210) including
a primary cyclone (214) for separating contaminants from air introduced into the primary cyclone (214),
a primary dust storing section (212) for storing dust separated by the primary cyclone (214),
a plurality of secondary cyclones (215) for separating contaminants entrained in the air discharged from the primary cyclone (214), the plurality of secondary cyclones (215) being arranged around the primary cyclone (214),
a secondary dust storing section (213) for storing the dust separated by the plurality of secondary cyclones (215),
a first discharge port (214b) formed through the top of the primary cyclone (214), and second discharge ports (215b) discharging air from the secondary cyclones (215), the second discharge ports (215b) being arranged at a top portion of the dust collecting container (210);
a filter (237) for re-filtering the air discharged from the second discharge ports (215b), thereby separating contaminants entrained in the air; and
a top cover (230) including a filter housing (236) providing a space for receiving the filter (237), the top cover (230) defining a predetermined space between the filter (237) and the second discharge ports (215b).

2. The dust collector according to claim 1, wherein the filter housing (236) includes a filter housing discharge member (236c) for discharging the air passing through the filter (237), and housing bosses (236d) for fastening the filter housing (236) to the top cover (230).

3. The dust collector according to claim 2, wherein the filter housing discharge member (236c) is inclined with respect to the top portion of the dust collecting container (210).

4. The dust collector according to claim 3, wherein the filter housing discharge member (236c) is downwardly inclined toward a cover discharge port formed at the top cover (230).

5. The dust collector according to claim 2, 3 or 4, wherein the filter (237) is in contact with the top portion of the dust collecting container (210) at one side of the filter (237), and is spaced apart from the top portion of the dust collecting container (210) by a predetermined gap at the other side of the filter (237).

6. The dust collector according to claim 2, 3, 4 or 5, wherein the filter housing discharge member (236c) includes lattice-shaped discharge ports.

7. The dust collector according to any one of claims 1 to 6, wherein the filter (237) is forcibly fitted in the filter housing (236).

8. The dust collector according to any one of claims 1 to 7, wherein the filter housing (236) further includes a filter support member (238) for supporting the filter (237).

9. The dust collector according to claim 8, wherein the filter support member (238) comprises support protrusions protruded from an inner peripheral surface of the filter housing (236).

## Patentansprüche

1. Ein Staubsammler (200) für einen Staubsauger, mit:
einem Staubsammelbehälter (210) mit
einem Primär-Zyklon (214) zum Abtrennen von Verunreinigungen von in das Primär-Zyklon (214) eingebrachter Luft,
einem Primär-Staubspeicherabschnitt (212) zum Speichern von durch das Primär-Zyklon (214) abgetrenntem Staub,
einer Vielzahl von Sekundär-Zyklonen (215) zum Abtrennen von in der aus dem Primär-Zyklon (214) ausgetragenen Luft enthaltenen Verunreinigungen, wobei die Vielzahl der Sekundär-Zyklone (215) um das Primär-Zyklon (214) herum angeordnet sind,
einem Sekundär-Staubspeicherabschnitt (213) zum Speichern des durch die Vielzahl der Sekundär-Zyklone (215) abgetrennten Staubs,
einem ersten Austraganschluss (214b), der durch die Oberseite des Primär-Zyklons (214) gebildet ist, und zweiten Austraganschlüssen (215b) zum Austragen von Luft aus den Sekundär-Zyklonen (215), wobei die zweiten Austraganschlüsse (215b) an einem oberen Abschnitt des Staubsammelbehälters (210) angeordnet sind,
einem Filter (237) zum erneuten Filtern der von den zweiten Austraganschlüssen (215b) ausgetragenen Luft, um dadurch in der Luft enthaltene Verunreinigungen abzutrennen, und
einer oberen Abdeckung (230) mit einem Filtergehäuse (236), das einen Raum zur Aufnahme des Filters (237) vorsieht, wobei die obere Abdeckung (230) einen vorbestimmten Raum zwischen dem Filter (237) und den zweiten Austraganschlüssen (215b) definiert.

2. Der Staubsammler gemäß Anspruch 1, wobei das Filtergehäuse (236) ein Filtergehäuse-Austragelement (236c) zum Austragen der den Filter (237) passierenden Luft, und Gehäuseansätze (236d) zum Befestigen des Filtergehäuses (236) an der oberen Abdeckung (230) aufweist.

3. Der Staubsammler gemäß Anspruch 2, wobei das Filtergehäuse-Austragelement (236c) bezüglich dem oberen Abschnitt des Staubsammelbehälters (210) geneigt ist.

4. Der Staubsammler gemäß Anspruch 3, wobei das Filtergehäuse-Austragelement (236c) nach unten zu einem an der oberen Abdeckung (230) ausgebildeten Abdeckungs-Austraganschluss geneigt ist.

5. Der Staubsammler gemäß Anspruch 2, 3 oder 4, wobei der Filter (237) in Kontakt mit dem oberen Abschnitt des Staubsammelbehälters (210) an einer Seite des Filters (237) ist, und er von dem oberen Abschnitt des Staubsammelbehälters (210) um einen vorbestimmten Zwischenraum an der anderen Seite des Filters (237) beabstandet ist.

6. Der Staubsammler gemäß Anspruch 2, 3, 4 oder 5, wobei das Filtergehäuse-Austragelement (236c) gitterförmige Austraganschlüsse aufweist.

7. Der Staubsammler gemäß einem der Ansprüche 1 bis 6, wobei der Filter (237) unter Zwang in das Filtergehäuse (236) eingesetzt ist.

8. Der Staubsammler gemäß einem der Ansprüche 1 bis 7, wobei das Filtergehäuse (236) ferner ein Filter-Halteelement (238) zum Halten des Filters (237) aufweist.

9. Der Staubsammler gemäß Anspruch 8, wobei das Filter-Halteelement (238) Haltevorsprünge aufweist, die von einer Innenumfangsfläche des Filtergehäuses (236) vorstehen.

## Revendications

1. Collecteur de poussière (200) pour un aspirateur, comprenant :
un récipient de collecte de poussière (210) comprenant :
un cyclone principal (214) pour séparer des contaminants de l'air introduit dans le cyclone principal (214),
une section de stockage de poussière principale (212) pour stocker la poussière séparée par le cyclone principal (214),
une pluralité de cyclones secondaires (215) pour séparer des contaminants entraînés dans l'air déchargé du cyclone principal (214), la pluralité de cyclones secondaires (215) étant agencés autour du cyclone principal (214),
une section de stockage de poussière secondaire (213) pour stocker la poussière séparée par la pluralité de cyclones secondaires (215),
un premier orifice de décharge (214b) formé à travers le sommet du cyclone principal (214) et des seconds orifices de décharge (215b) déchargeant l'air des cyclones secondaires (215), les seconds orifices de décharge (215b) étant agencés au niveau d'une partie supérieure du récipient de collecte de poussière (210) ;
un filtre (237) pour filtrer à nouveau l'air déchargé par les seconds orifices de décharge (215b), séparant ainsi des contaminants entraînés dans l'air ; et
un couvercle supérieur (230) comprenant un boîtier de filtre (236) fournissant un espace pour recevoir le filtre (237), le couvercle supérieur (230) définissant un espace prédéterminé entre le filtre (237) et les seconds orifices de décharge (215b).

2. Collecteur de poussière selon la revendication 1, dans lequel le boîtier de filtre (236) comprend un élément de décharge de boîtier de filtre (236c) pour décharger l'air passant par le filtre (237), et loger des bossages (236d) pour fixer le boîtier de filtre (236) sur le couvercle supérieur (230).

3. Collecteur de poussière selon la revendication 2, dans lequel l'élément de décharge de boîtier de filtre (236c) est incliné par rapport à la partie supérieure du récipient de collecte de poussière (210).

4. Collecteur de poussière selon la revendication 3, dans lequel l'élément de décharge de boîtier de filtre (236c) est incliné vers le bas vers un orifice de décharge de couvercle formé au niveau du couvercle supérieur (230).

5. Collecteur de poussière selon la revendication 2, 3 ou 4, dans lequel le filtre (237) est en contact avec la partie supérieure du récipient de collecte de poussière (210) d'un côté du filtre (237) et est éloigné de la partie supérieure du récipient de collecte de poussière (210) par un espace prédéterminé de l'autre côté du filtre (237).

6. Collecteur de poussière selon la revendication 2, 3, 4 ou 5, dans lequel l'élément de décharge de boîtier de filtre (236c) comprend des orifices de décharge en forme de treillis.

7. Collecteur de poussière selon l'une quelconque des revendications 1 à 6, dans lequel le filtre (237) est monté à force dans le boîtier de filtre (236).

8. Collecteur de poussière selon l'une quelconque des revendications 1 à 7, dans lequel le boîtier de filtre (236) comprend en outre un élément de support de filtre (238) pour supporter le filtre (237).

9. Collecteur de poussière selon la revendication 8, dans lequel l'élément de support de filtre (238) comprend des saillies de support faisant saillie d'une surface périphérique interne du boîtier de filtre (236).
